# EUROPEAN PATENT APPLICATION

(11) **EP 4 506 251 A1**
(43) Date of publication of application: **12.02.2025**
(21) Application number: 24192442.2
(22) Date of filing: 01.08.2024
(51) Int. Cl.: B64D 11/06

(54) **SEAT EXTENSION FURNITURE FOR AIRCRAFT SEATS**

(30) Priority: 07.08.2023 US 202318230844
(71) Applicant: B/E Aerospace, Inc., Winston-Salem, NC 27105 (US)
(72) Inventor: RUIZ LARA, Oscar, Kirkland (US); SANTIAGO, Mauricio, Redmond (US); VANINETTI, Travis J., Bothell (US)
(74) Representative: Dehns

(57) **Abstract**

A surface extension system (100) is disclosed. The surface extension system (100) may include secondary furniture (102), the secondary furniture (102) positioned proximal to a seat (104) configured to be oriented in a sitting position, a slouched position, or a berthed position. The secondary furniture (102) may include a support structure (108). The secondary furniture (102) may include a top surface (106). The secondary furniture (102) may include a pivot (110), wherein the pivot (110) is configured to couple the support structure (108) and the top surface (106) and permit the top surface (106) to rotate to match the orientation of the seat (104) in any of the sitting position, the slouched position, or the berthed position. The secondary furniture (102) may include a locking mechanism (112), wherein when the locking mechanism (112) is engaged the locking mechanism (112) prevents rotation of the top surface (106) about the pivot (110) and when the locking mechanism (112) is disengaged the locking mechanism (112) allows rotation of the top surface (106) about the pivot (110).

## Description

### FIELD

The present disclosure is related to aircraft, and more specifically to seating arrangements for aircraft.

### BACKGROUND

Many first and/or business class aircraft seats allow passengers to recline their seat from a sitting position (e.g., an upright position) to a berthed position (e.g., a fully-flat sleeping position). The angle of the seat between the sitting position and the berthed position may not be uniform to account for ergonomics and the angle at which commercial aircraft typically fly at. Depending on the aircraft and the seating arrangement, there may also be furniture positioned around the aircraft seat. This furniture may be configured to match the angle of the seat when in the sitting position or the berthed position, but not both. The present invention provides means for positioning both seat adjacent furniture and a seat in the same position while at or in between a sitting and berthing position.

### SUMMARY

A surface extension system is disclosed, in accordance with an aspect of the present invention. The surface extension system includes secondary furniture, the secondary furniture positioned proximal to a seat configured to be oriented in a sitting position, a slouched position, or a berthed position. In embodiments, the secondary furniture includes a support structure, the support structure configured to raise a height of the secondary furniture to a height of the seat. The secondary furniture includes a top surface. The secondary furniture includes a pivot, wherein the pivot is configured to couple the support structure and the top surface, wherein the pivot permits the top surface to rotate about the pivot in order to match the orientation of the seat in any of the sitting position, the slouched position, or the berthed position. The secondary furniture includes a locking mechanism, wherein when the locking mechanism is engaged the locking mechanism prevents rotation of the top surface about the pivot and when the locking mechanism is disengaged the locking mechanism allows rotation of the top surface about the pivot.

A surface extension system is disclosed, in accordance with an aspect of the present invention. The surface extension system includes secondary furniture, the secondary furniture positioned proximal to a seat configured to be oriented in a sitting position, a slouched position, or a berthed position. The secondary furniture includes a support structure, the support structure configured to raise a height of the secondary furniture to a height of the seat. In embodiments, the secondary furniture includes a top surface. The secondary furniture includes a pivot, wherein the pivot is configured to couple the support structure and the top surface, wherein the pivot permits the top surface to rotate about the pivot in order to match the orientation of the seat in any of the sitting position, the slouched position, or the berthed position. The secondary furniture includes a locking mechanism, wherein when the locking mechanism is engaged the locking mechanism prevents rotation of the top surface about the pivot and when the locking mechanism is disengaged the locking mechanism allows rotation of the top surface about the pivot. In embodiments, the surface extension system includes an armrest wherein a height of the armrest is adjustable to correspond with the seat in any of the sitting position, the slouched position, or the berthed position. In embodiments, the armrest includes an armrest top surface. In embodiments, the armrest includes an armrest pivot, wherein the pivot permits the armrest to rotate about the armrest pivot in order to match the orientation of the seat in any of the sitting position, the slouched position, or the berthed position. In embodiments, the armrest includes an armrest locking mechanism, wherein when the armrest locking mechanism is engaged the armrest locking mechanism prevents rotation of armrest about the armrest pivot and when the armrest locking mechanism is disengaged the armrest locking mechanism allows rotation of the armrest about the armrest pivot.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1A is a perspective view of secondary furniture and a seat in a sitting position where there is a step between surfaces, in accordance with one or more embodiments of the present disclosure.
FIG. 1B is a perspective view of secondary furniture and a seat in a sitting position where surfaces are aligned because a top surface of secondary furniture allows the top surface to match the orientation of the seat in the sitting position, in accordance with one or more embodiments of the present disclosure.
FIG. 2A is a perspective view of secondary furniture and a seat in a berthed position where there is a step between surfaces, in accordance with one or more embodiments of the present disclosure.
FIG. 2B is a perspective view of secondary furniture and a seat in a berthed position where surfaces are aligned because a top surface of secondary furniture allows the top surface to match the orientation of the seat in the sitting position, in accordance with one or more embodiments of the present disclosure.
FIG. 3A is a perspective view of the secondary furniture showing a lid in the top surface, in accordance with one or more embodiments of the present disclosure.
FIG. 3B is a perspective view of the secondary furniture showing a lid in the top surface open to access a storage compartment, in accordance with one or more embodiments of the present disclosure.
FIG. 4A is a top view of a seat in a sitting position and secondary furniture forming an extended sitting area, in accordance with one or more embodiments of the present disclosure.
FIG. 4B is a top view of a seat in a sitting position and secondary furniture and an armrest forming an extended sitting area, in accordance with one or more embodiments of the present disclosure.
FIG. 4C is a top view of a seat in a berthed position and secondary furniture forming an extended sleeping area, in accordance with one or more embodiments of the present disclosure.
FIG. 4D is a top view of a seat in a berthed position and secondary furniture and an armrest forming an extended sleeping area, in accordance with one or more embodiments of the present disclosure.
FIG. 5A is a perspective view of a surface extension system, in accordance with one or more embodiments of the present disclosure.
FIB. 5B is a perspective view of a surface extension system being used with a forward-facing seat, in accordance with one or more embodiments of the present disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination of or sub-combination of two or more such features, along with any other features which may not necessarily be expressly described or inherently present in the instant disclosure.

Additionally, in many first class and business class cabins, seats are configured in such a manner where each seat is housed within their own mini-suite on the aircraft. In this way, various considerations are given to create a mini-suite in a manner that is suitable private. Such considerations include dividers or partitions between other seats and/or the aisle and doors on each mini-suite. However, mini-suites in aircraft are required to comply with various regulations set forth by government agencies. Examples of such regulations may be found in "Proposed Special Condition on Installation of mini-suite type seating Applicable to Airbus A350" as set forth by the European Union Aviation Safety Agency (EASA), which is incorporated by reference herein in its entirety. Therefore, the mini-suites disclosed herein should be considered to comply with said regulations.

A mini-suite in an aircraft may be a seating arrangement surrounded by walls such that a passenger sitting in the mini-suite may have enhanced privacy. Each mini-suite may include a single seat with additional furniture, such as, but not limited to, center consoles, entertainment systems, or the like. Mini-suites may be separated from an adjacent mini-suite by things such as, but not limited to, center consoles, removable partitions, walls, or the like. To further enhance privacy, each mini-suite may include a door, though a mini-suite is not required to have a door.

In a general sense, an aircraft seat may be formed from three main parts: a footrest, a seat bottom, and a backrest.

On many longer flights it may be desirable for a seat to recline into various positions. These positions include the sitting position, the slouched position, and the berthed position. Embodiments of the present disclosure are directed to a surface extension system that permits a top surface of secondary furniture to match the orientation of the seat when the seat is any of the sitting position, the slouched position, or the berthed position. This may allow an extended surface in any of the positions of the seat.

For example, a seat may be configured to be in a sitting position. The sitting position may be the default position of the seat and resemble a chair (e.g., the footrest and backrest are vertical or approximately vertical and the seat bottom is horizontal or approximately horizontal). Further, a sitting position may be the required position for taxi, takeoff, and landing (TTOL).

A seat may also be adjustable to a berthed position. The berthed position may correspond to the footrest, seat bottom, and backrest being aligned in such a manner all three components are horizontal or are approximately horizontal. In this way, a berthed position of a seat may correspond to the seat being used as a bed.

A seat may also be adjustable to a slouched position. Broadly speaking, a slouched position may be any position of the seat within the seat's range of adjustment between the sitting position and the berthed position.

In many first class and business class configurations, there may be secondary furniture next to the seat. Such secondary furniture may include such things as an extended sitting area or a storage compartment. It may be desirable for the top surface of such secondary furniture to match the orientation (e.g., height and/or angle) of the seat. The top surface of the secondary furniture is generally at the height of the seat; however, the top surface may be aligned at a different angle than the seat.

For example, in a sitting position the front of the seat bottom (e.g., the part of the seat bottom closest to the footrest) may be approximately at a five-degree angle (e.g., five degrees higher) than the back of the seat bottom (e.g., the part of the seat bottom closes to the backrest). Further, when the seat is in a berthed position, the seat may be angled in such a manner where the passenger's head is at a three-degree angle (e.g., three degrees higher) relative to the passenger's feet. Thus, an eight-degree difference between the sitting and berthed positions may be present. These angle differences may be based upon ergonomic or other passenger comfort considerations. It is to be noted that the specific angle measurements given in the preceding example are illustrative only and should not be interpreted as limiting on the present disclosure.

Therefore, a surface extension system is disclosed. Broadly speaking, the surface extension system may provide secondary furniture with a top surface with an adjustable angle such that the orientation of the top surface may match the orientation of the seat. Thus, a useable area may be extended, as the matching orientation prevents steps, or bumps, in the transition between the two surfaces where the two surfaces do not match.

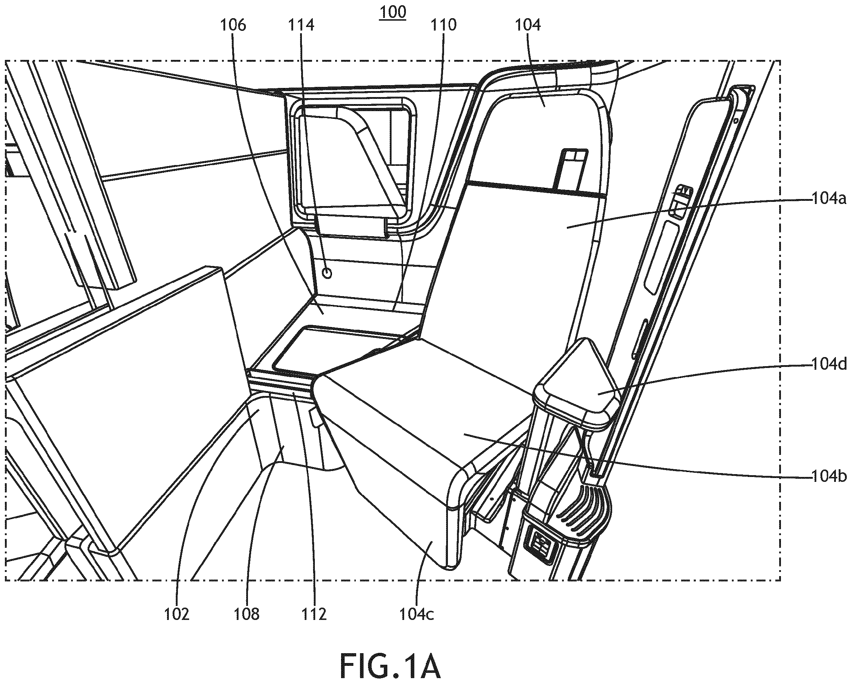

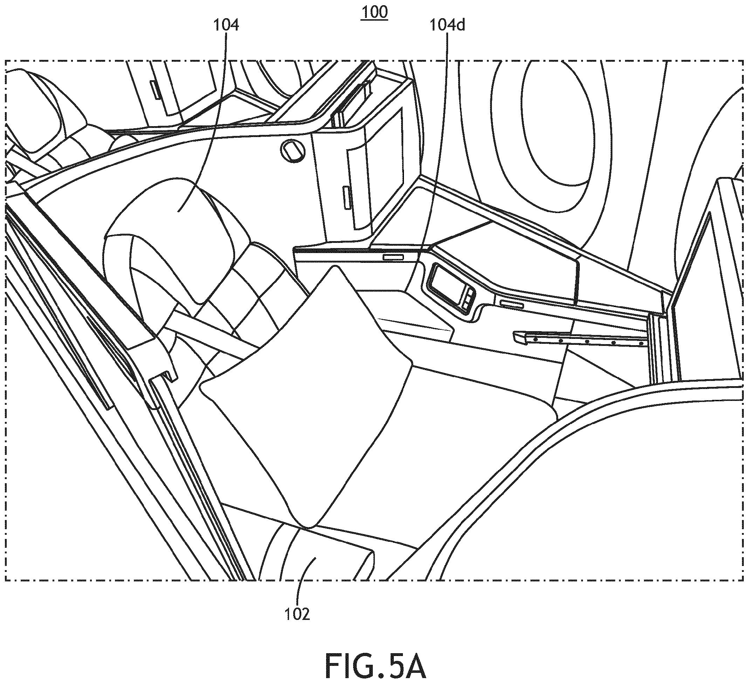

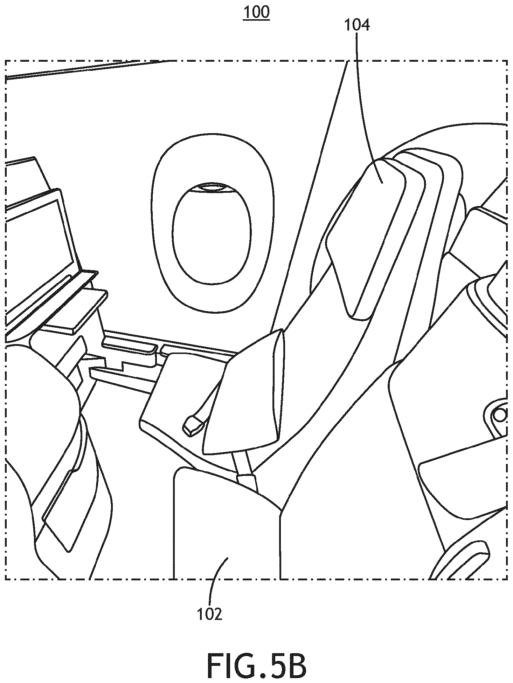

Referring now to FIGS. 1A-5B, a surface extension system 100 is disclosed, in accordance with one or more embodiments of the present disclosure. The surface extension system 100 may permit a top surface 106 of secondary furniture 102 to match the orientation of the seat 104 when the seat 104 is any of the sitting position, the slouched position, or the berthed position. This may allow an extended surface in any of the positions of the seat 104. Generally speaking, embodiments of the present disclosure and the surface extension system 100 disclosed herein depict the surface extension system 100 being used in an aircraft mini-suite. However, depictions of the surface extension system 100 being used in an aircraft mini-suite should be interpreted as illustrative rather than limiting on the present disclosure.

FIG. 1A is a perspective view of secondary furniture and a seat in a sitting position where there is a step between surfaces, in accordance with one or more embodiments of the present disclosure.

In embodiments, the surface extension system 100 may include secondary furniture 102. Broadly speaking, the secondary furniture may be any additional furniture in an aircraft mini-suite or next to an aircraft seat 104. For example, the secondary furniture 102 may resemble a small side table or a stool, however these examples should be interpreted as illustrative rather than limiting.

In embodiments, the secondary furniture 102 may be located proximal to a seat 104. The seat 104 may include a seatback 104a, a seat bottom 104b, a footrest 104c, and one or more armrests 104d. In embodiments, the seatback. may include a headrest, which may be a discrete component or integrated into the seatback 104a.

The seatback 104a, the seat bottom 104b, the footrest, 104c, and the one or more armrests 104d may be any group of structures capable of being arranged relative to each other in order to form a seat 104. For example, the seatback 104a, the seat bottom 104b, the footrest, 104c, and the one or more armrests 104d may have any given either spatial or ergonomic considerations. Further, the seatback 104a, the seat bottom 104b, the footrest, 104c, and the one or more armrests 104d may have any surface profile that may be required by ergonomic considerations or spatial considerations (e.g., the seatback 104a, the seat bottom 104b, the footrest, 104c, and the one or more armrests 104d may have a raised edges to cradle a passenger, the seatback 104a, the seat bottom 104b, the footrest, 104c, and the one or more armrests 104d may have rounded edges, etc.). Further, the seatback 104a, the seat bottom 104b, the footrest, 104c, and the one or more armrests 104d may be padded. The seatback 104a, the seat bottom 104b, the footrest, 104c, and the one or more armrests 104d may also include a covering (e.g., cloth, leather, faux leather, polyester, or the like).

The seat 104 may be configured in any one of a sitting position, a slouched position, or a berthed position. For example, the seatback 104a, the seat bottom 104b, and/or the footrest 104c may change positions relative to each other in order to change the configuration of the seat 104. Further, the height of the armrest 104d may be adjustable (e.g., the height and/or angle of the armrest 104d may be adjustable) in order to accommodate a passenger when the seat 104 is in any configuration. In this way, the armrest 104d may be adjustable to match the orientation of the seat 104 (e.g., the height and/or angle of the seat 104) when the seat 104 is in any of the sitting position, the slouched position, or the berthed position.

In embodiments, the secondary furniture 102 may include a top surface 106. For example, the top surface 106 may be the component within the secondary furniture 102 that is adjustable to allow the surface of the seat bottom 104b to be extended.

In embodiments, the secondary furniture 102 may include a support structure 108. The support structure 108 may form the body of the secondary furniture 102. The support structure 108 may be made from any material suitable to hold a mass (e.g., a mass of passengers, mass of luggage, or the like). The support structure 108 may further be built into a mini-suite on an aircraft, such that the support structure 108 and the walls of the mini-suite are connected.

Generally speaking, the secondary furniture 102 may be located between the seat 104 and a perimeter of the seating area (e.g., a perimeter of the mini-suite), such as, but not limited to, a partition between mini-suites or an exterior wall of the mini-suite. Similar to the components of the seat 104, the secondary furniture 102 may be any shape and/or have any surface profile. Further, the secondary furniture 102 (e.g., the top surface 106 of the secondary furniture 102) may be padded and include a covering. The thickness of the padding and/or the covering chosen may be chosen to match the seat 104. The secondary furniture 102 may be positioned such that the secondary furniture 102 and the armrest 104d are disposed on opposite sides of the seat.

In embodiments, the secondary furniture 102 may also include a pivot 110. The pivot 110 may couple the top surface 106 of the secondary furniture 102 to the support structure 108. Further, the pivot 110 may provide a point for the top surface 106 to rotate about in order to allow the top surface 106 to match the orientation (e.g., the angle) of the seat 104. By way of a nonlimiting example, the pivot 110 may be a hinge. In this way, the pivot 110 permits rotation in order for the top surface 106 to match the orientation of the seat 104.

The secondary furniture may further include a locking mechanism 112. The locking mechanism 112 may be anything known in the art suitable for preventing rotation about the pivot 110 past a desired and/or a predetermined amount. For example, the support structure 108 of the secondary furniture 102 may serve as a locking mechanism 112 by preventing further rotation of the top surface 106. By way of another example, the locking mechanism may also include, but is not limited to, a gas cylinder or a latch configured to prevent the top surface 106 from rotating about the pivot 110 in at least one of the clockwise direction or the counter clockwise direction. In this way, the locking mechanism 112 may lock the top surface 106 into a stable position (e.g., a position where the secondary furniture 102 may hold the weight of a passenger) in a variety of orientations (e.g., a variety of angles). Therefore, when the locking mechanism 112 is engaged, the orientation of the top surface 106 may be prevented from moving until the locking mechanism 112 is disengaged.

It is contemplated that the locking mechanism 112 may provide a pivot stop to prevent rotation of the top surface 106 beyond a range of angles associated with the angles matching the orientation of the seat in the berthed position and the sitting position. For example, there may be a first end position and a second end position where the pivot stop is configured to stop rotation of the top surface 106 about the pivot 110.

The first end position may correspond to when the top surface 106 is aligned with the seat 104 when the seat 104 is in a sitting position. The second end position may correspond to when the top surface 106 is aligned with the seat 104 when the seat 104 is in a berthed position. Further, any point in between the first end position and the second end position may correspond to when the seat 104 is in the slouched position.

It is noted that the surface extension system 100 may be operated either manually or electronically. For example, a passenger may push a button (e.g., a control 114 in FIG. 1A) to mechanically disengage the locking mechanism 112. In this way, a passenger may rotate the top surface 106 manually (e.g., via the pivot) to reach a desired angle (e.g., matching the orientation of the seat 104).

By way of another example, there may be one or more controls 114 associated with the surface extension system 100. These controls 114 may correspond to electronic actuators that cause the top surface 106 to rotate when pressed. In embodiments, the electronic actuator accepts an input (e.g., from a button on the controls 114) to adjust the top surface 106 to a selected position. For instance, a control 114 may correspond to rotation about the pivot 110 in the clockwise direction and another control 114 may correspond to rotation about the pivot 110 in the counterclockwise direction. Further, there may be controls 114 corresponding to a rotation (e.g., an angle) of the top surface 106 to match the seat in a sitting position and/or a berthed position (e.g., the controls 114 may include preset positions for the orientation of the top surface 106 such that the top surface 106 matches the orientation of the seat when the seat 104 is in at least both the sitting position and the berthed position).

In embodiments, the electronic actuator may be configured to automatically match the orientation of the top surface 106 to the orientation of the seat 104 when the seat 104 is in any of the sitting position, the slouched position, or the berthed position.

For example, in FIG. 1A, the seat 104 (e.g., the seat bottom 104b) and the top surface 106 of the secondary furniture 102 are at different orientations. In this way, there is a step (e.g., a height difference) in the surfaces between the top surface 106 and the seat bottom 104b caused by the difference in the angles.

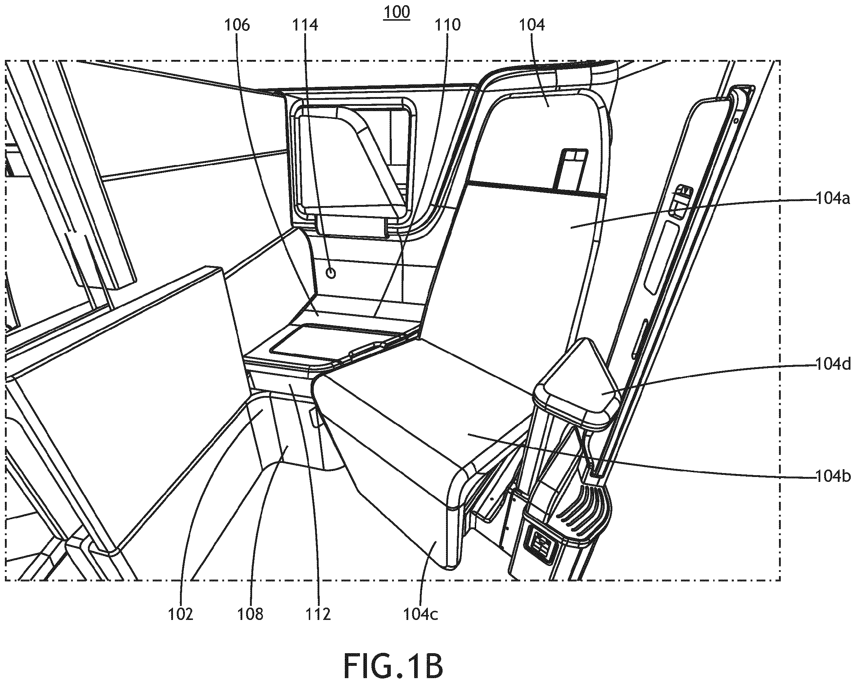

FIG. 1B is a perspective view of secondary furniture 102 and a seat 104 in a sitting position where surfaces are aligned, in accordance with one or more embodiments of the present disclosure.

For example, top surface 106 of the secondary furniture 102 may be adjusted from the position of the top surface 106 in FIG. 1A (e.g., by manual means or by electric means). In this way, the angle of the seat 104 (e.g., the seat bottom 104b) and the top surface 106 match such that there is a uniform surface between the two (e.g., there is no step between surfaces or a height difference between the secondary furniture 102 and the seat bottom 104b).

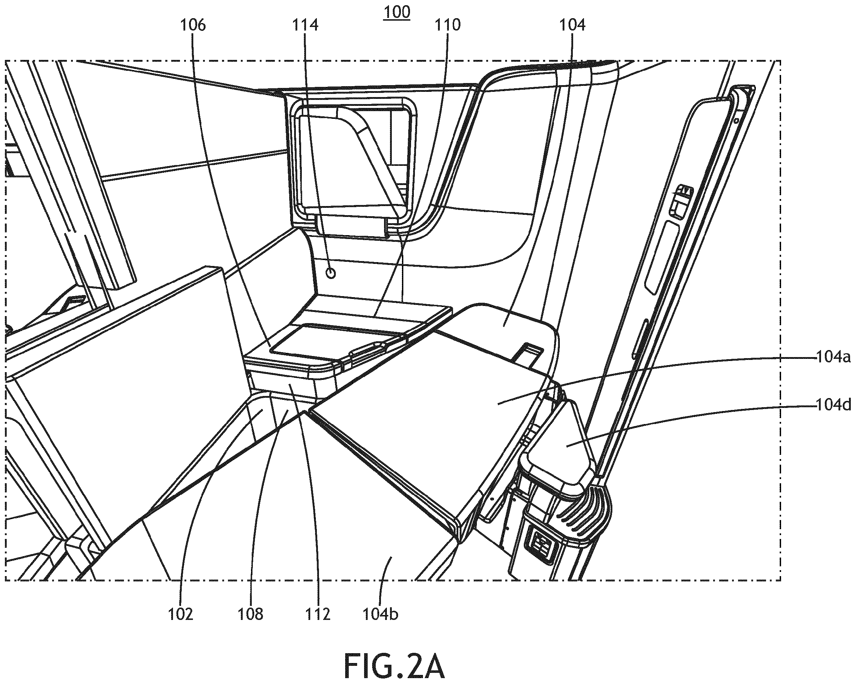

FIG. 2A is a perspective view of secondary furniture 102 and a seat 104 in a berthed position where there is a step between surfaces, in accordance with one or more embodiments of the present disclosure.

For example, in FIG. 2A, the top surface 106 may be configured to match the orientation of the seat 104 when the seat 104 is in the sitting position. This may be undesirable as the effective area around the seat has been reduced due to the difference in heights between the top surface 106 and the seat 104 caused by a difference in angle.

As shown in FIG. 2A, the armrest 104d may also be adjustable. For example, the height of the armrest 104d may be adjustable such that it matches the height of the seat 104 when the seat 104 is in the berthed position and provide an area for a passenger to rest their arm when the seat 104 is in the sitting position or the slouched position.

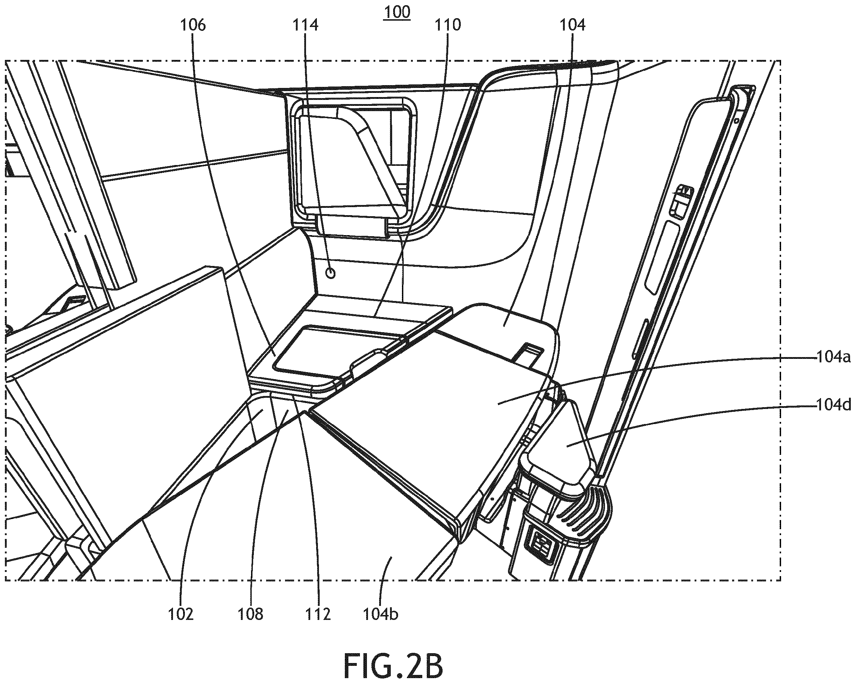

FIG. 2B is a perspective view of secondary furniture 102 and a seat 104 in a berthed position where surfaces are aligned, in accordance with one or more embodiments of the present disclosure.

For example, in FIG. 2B, the orientation (e.g., the angle) of the top surface 106 of the secondary furniture 102 matches the seat 104. In this way, the usable area around the seat may be increased. Further, the armrest 104d is matching the orientation of the seat 104 and the top surface 106 such that the usable area is further increased.

It should be noted that in an aircraft setting a seat (e.g., the seat bottom 104b) may have an angle of approximately 5°, where the front of the seat bottom 104b is higher than the back of the seat bottom 104b. In the berthed position, the seat may have an angle of approximately 3° where the seatback 104a is higher than the footrest 104c. In this way, there may be a total of 8° that must be accounted for in order to have the secondary furniture 102 and the seat 104 match one another's orientations. The angles of the seat 104 may be dictated by ergonomic concerns or may be chosen to counteract the angle at which commercial aircraft typically fly. However, the forgoing discussion of angles should be interpreted as illustrative and not limiting on the present disclosure, as a wide variety of angles may be chosen and be within the capabilities of the surface extension system 100.

It should also be noted that the orientation of the armrest 104d may be adjustable in the same manner as the secondary furniture 102. However, the armrest 104d need not be adjustable through the same means as the secondary furniture 102. Therefore, the surface extension system 100 may be thought of to include the secondary furniture 102 and its associated components, the armrest 104d, or both.

For example, the armrest 104d may include an armrest top surface, similar to that of the top surface 106. The armrest top surface may provide a place for a passenger to place their arm when the seat 104 is in the sitting or slouched position or may extend the area of the seating arrangement when the seat 104 is in the berthed position. Further, the armrest 104d may include an armrest pivot, similar to that of the pivot 110. The armrest pivot may permit the armrest 104d to pivot about the armrest pivot such that the armrest 104d may match the orientation of the seat 104. The armrest 104d may further include an armrest locking mechanism, where the armrest locking mechanism prevents the armrest 104d from rotating when it is engaged and allows the armrest 104d to rotate when it is not engaged (not shown).

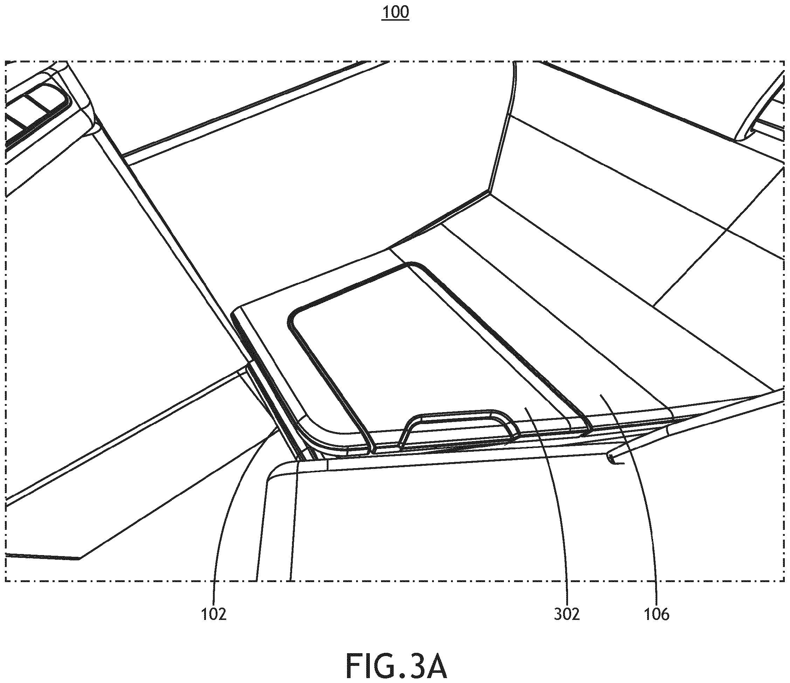

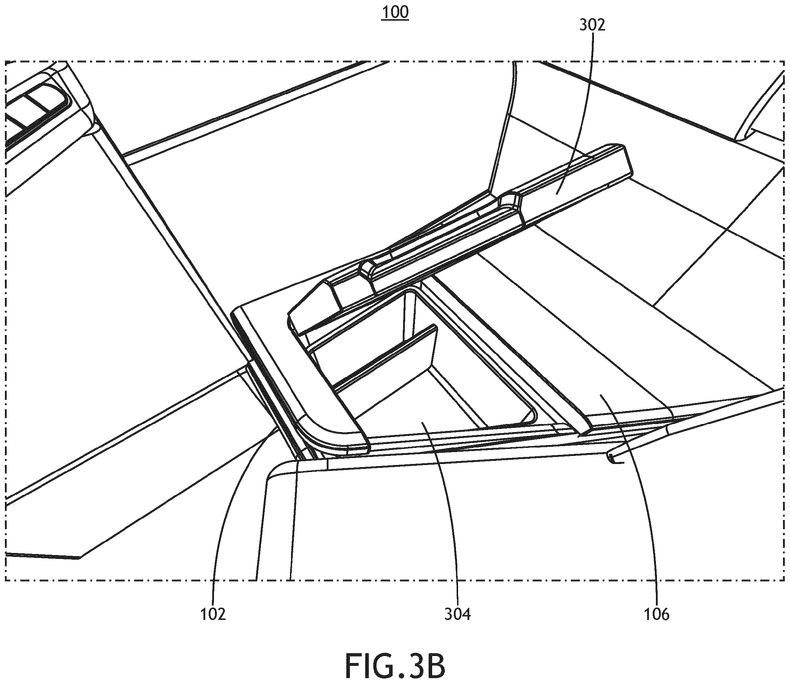

FIG. 3A is a perspective view of the secondary furniture 102 showing a lid 302 in the top surface 106, in accordance with one or more embodiments of the present disclosure. FIG. 3B is a perspective view of the secondary furniture 102 showing a lid 302 in the top surface 106 open to access a storage compartment 304, in accordance with one or more embodiments of the present disclosure.

For example, the secondary furniture 102 may include a storage compartment 304. The storage compartment 304 may be built into the secondary furniture 102 such that it is included as part of the support structure 108. Further, the lid 302 may be built into the top surface 106. The lid 302 may be on hinges or otherwise attached to the top surface 106 of the secondary furniture 102 in a manner that allows the lid 302 to pivot or otherwise open. The lid 302 may allow access to a storage compartment 304 located within the secondary furniture 102 when open or restrict access to the storage compartment 304 within the secondary furniture 102 when closed. Further, the lid 302 may be made from the same material as the top surface 106 secondary furniture 102 (e.g., and also made from the same material as the seat 104). In embodiments, the top surface 106 forms a top side of the storage compartment 304.

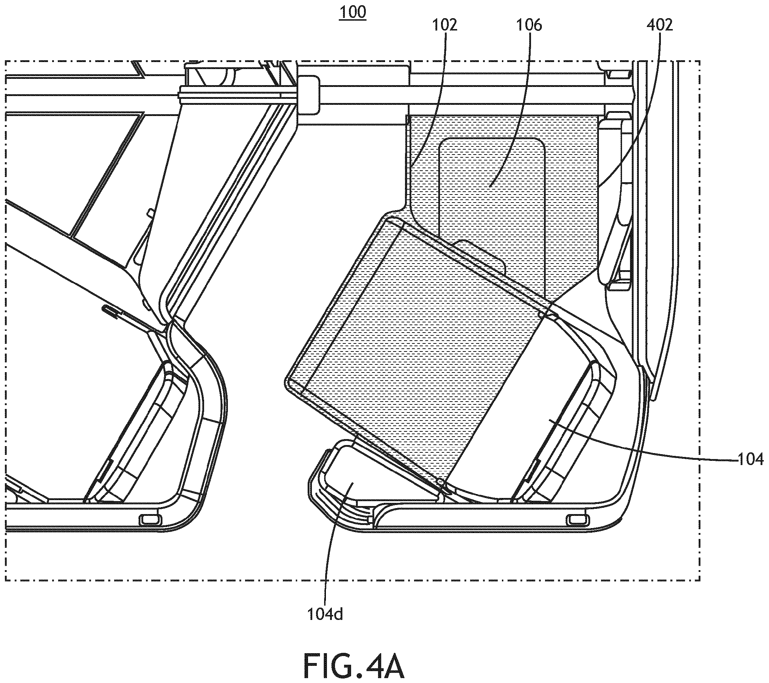

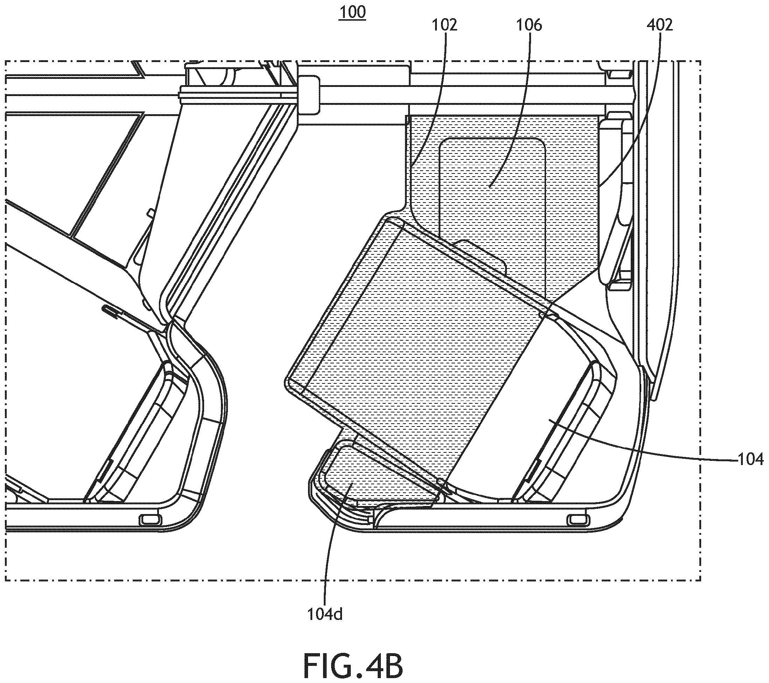

FIG. 4A is a top view of a seat 104 in a sitting position and secondary furniture 102 highlighting an extended seating area 402, in accordance with one or more embodiments of the present disclosure. FIG. 4B is a top view of a seat 104 in a sitting position and secondary furniture 102 and an armrest 104d forming an extended sitting area 402, in accordance with one or more embodiments of the present disclosure.

However, an extended seating area 402 may also be formed when the seat 104 is in the slouched position. It is noted that the orientation (e.g., the angle) of the seat bottom 104b may change between the sitting position and the slouched position (or between various degrees of the slouched position) and therefore, the top surface 106 of the secondary furniture 102 may be adjustable to match the orientation of the seat bottom 104b in order to create an extended seating area 402. In this way, the extended seating area 402 may be formed when the orientation of the top surface 106 of the secondary furniture 102 and the orientation of the seat 104 (e.g., the seat bottom 104b) match. Further, as discussed previously herein, the armrest 104d may also be adjustable in a manner that allows it to match the orientation of the seat 104 (e.g., the height and/or angle of the seat 104), or provide an area for a passenger to place their arm. In this way, the armrest 104d may further expand the area (e.g., space) of the extended seating area 402, in the same manner as the top surface 106 of the secondary furniture 102 (e.g., as in FIG. 4B).

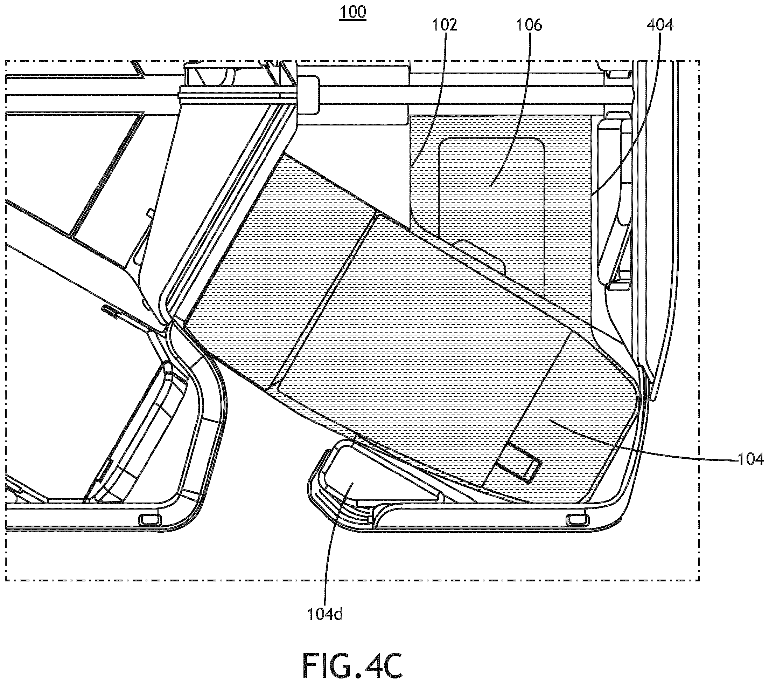

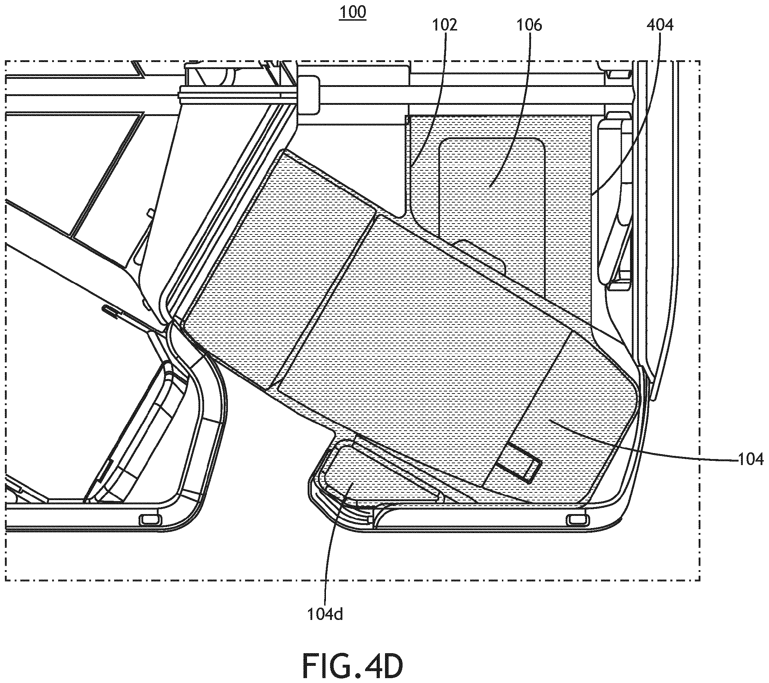

FIG. 4C is a top view of a seat 104 in a berthed position and secondary furniture 102 forming an extended sleeping area 404, in accordance with one or more embodiments of the present disclosure. FIG. 4D is a top view of a seat 104 in a berthed position and secondary furniture 102 104d and an armrest forming an extended sleeping area 404, in accordance with one or more embodiments of the present disclosure.

In the berthed position, the seatback 104a, seat bottom 104b, and footrest 104c (e.g., the seat as a whole) may all have a common orientation (e.g., angle) relative to the floor of the aircraft. However, this common angle may be different than the angle of the seat bottom 104b in the sitting position or the slouched position. Therefore, the top surface 106 of the secondary furniture 102 may be adjustable to match the orientation of the seat 104 when the seat 104 is in the berthed position in order to create an extended sleeping area 404. In this way, the extended sleeping area 404 may be formed when the orientation of the top surface 106 of the secondary furniture 102 and the orientation of the seat 104 (e.g., the seatback 104a, the seat bottom 104b, and/or the footrest 104c) match. Further, as discussed previously herein, the armrest 104d may also be adjustable in a manner that allows it to match the orientation of the seat 104 (e.g., the height and/or angle of the seat 104). In this way, the armrest 104d may further expand the area (e.g., space) of the extended sleeping area 404, in the same manner as the top surface 106 of the secondary furniture 102 (e.g., as in FIG. 4D).

FIG. 5A is a perspective view of a surface extension system 100, in accordance with one or more embodiments of the present disclosure.

For example, as shown in FIG. 5A, the secondary furniture 102 may be deployed on either the aisle side of the seat 104. Further, additional furniture beyond the secondary furniture 102 may be included that may or may not be adjustable in the same manner as the secondary furniture 102. Further, as shown in FIG. 5A, the armrest 104d may be built into the additional furniture, or otherwise stationary.

FIB. 5B is a perspective view of a surface extension system 100 being used with a forward-facing seat 104, in accordance with one or more embodiments of the present disclosure.

Much of the present disclosure has depicted the surface extension system 100 as being used with reverse herringbone seats 104 (e.g., seats that are configured such that the seat 104 is angled away from an aisle (e.g., angled towards a window or the center of a cabin)). However, this need not be the case, as the surface extension system 100 may be included as part of seats 104 utilizing any orientation such as, but not limited to, forward facing seats 104 or herringbone seats 104.

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

Although inventive concepts have been described with reference to the embodiments illustrated in the attached drawing figures, equivalents may be employed and substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

## Claims

1. A surface extension system, comprising:
secondary furniture, positioned proximal to a seat configured to be oriented in a sitting position, a slouched position, or a berthed position, wherein the secondary furniture comprises:
a support structure, the support structure configured to raise a height of the secondary furniture to a height of the seat;
a top surface;
a pivot, wherein the pivot is configured to couple the support structure and the top surface, wherein the pivot permits the top surface to rotate about the pivot in order to match the orientation of the seat in any of the sitting position, the slouched position, or the berthed position; and
a locking mechanism, wherein when the locking mechanism is engaged the locking mechanism prevents rotation of the top surface about the pivot and when the locking mechanism is disengaged the locking mechanism allows rotation of the top surface about the pivot.

2. The surface extension system of claim 1, wherein the top surface of the secondary furniture is manually adjusted via the pivot.

3. The surface extension system of claim 1, wherein an electronic actuator adjusts orientation of the top surface.

4. The surface extension system of claim 3, wherein the electronic actuator includes preset positions for the orientation of the top surface such that the top surface matches the orientation of the seat when the seat is in at least the sitting position and the berthed position.

5. The surface extension system of claim 3 or 4, wherein the electronic actuator accepts an input to adjust the top surface to a selected position.

6. The surface extension system of claim 3, 4 or 5, wherein the electronic actuator is configured to match the orientation of the top surface to the orientation of the seat when the seat is in any of the sitting position, the slouched position, or the berthed position.

7. The surface extension system of any preceding claim, further comprising:
a storage compartment, wherein the top surface forms a top side of the storage compartment, wherein, optionally, the top surface comprises a lid, the lid configured to be opened to allow access to the storage compartment and closed to restrict access to the storage compartment.

8. The surface extension system of any preceding claim, wherein the secondary furniture further comprises a pivot stop, the pivot stop configured to prevent the rotation of the top surface beyond a first end position and a second end position.

9. The surface extension system of claim 8, wherein the first end position corresponds with when the top surface is aligned with the seat when the seat is in the sitting position; and/or
wherein the second end position corresponds with when the surface is aligned with the seat when the seat is in the berthed position.

10. The surface extension of system claim 8 or 9, wherein the any point between the first end position and the second end position corresponds with the seat in the slouched position.

11. The surface extension of system of any preceding claim, wherein the top surface and the seat are covered with matching material.

12. The surface extension system of any preceding claim, wherein the surface extension further comprises an armrest, wherein a height of the armrest is adjustable to correspond with the seat in any of the sitting position, the slouched position, or the berthed position.

13. The surface extension system of claim 12, wherein the armrest comprises:
an armrest top surface;
an armrest pivot, wherein the pivot permits the armrest to rotate about the armrest pivot in order to match the orientation of the seat in any of the sitting position, the slouched position, or the berthed position; and
an armrest locking mechanism, wherein when the armrest locking mechanism is engaged the armrest locking mechanism prevents rotation of the armrest about the armrest pivot and when the armrest locking mechanism is disengaged the armrest locking mechanism allows rotation of the armrest about the armrest pivot.

14. The surface extension system of any preceding, wherein the secondary furniture and the seat form an extended seating surface when the orientation of the top surface of the secondary furniture and the orientation of the seat match when the seat is in the sitting position or the slouched position; and/or
wherein the secondary furniture and the seat form an extended sleeping surface when the orientation of the top surface of the secondary furniture and the orientation of the seat match when the seat is in the berthed position.

15. The surface extension system of any preceding claim, wherein the locking mechanism comprises a gas cylinder; and/or
wherein the support structure forms part of an aircraft mini-suite.
